# EUROPEAN PATENT APPLICATION

(11) **EP 2 781 289 A2**
(43) Date of publication of application: **24.09.2014**
(21) Application number: 14160487.6
(22) Date of filing: 18.03.2014
(51) Int. Cl.: B23H 1/02, B23H 1/08, B23H 7/02

(54) **Wire electric discharge machine having function for discriminating state in work tank**

(30) Priority: 19.03.2013 JP 2013057317
(71) Applicant: FANUC CORPORATION, Oshino-mura Minamitsuru-gun Yamanashi 401-0597 (JP)
(72) Inventor: Yoshida, Masayuki, Minamitsuru-gun,, Yamanashi 401-0597 (JP)
(74) Representative: Ward, James Norman

(57) **Abstract**

The wire electric discharge machine determines whether machining is submerged machining or flushing machining. If the machining is the submerged machining, when a fluid level of working fluid is lower than a predetermined height, the wire electric discharge machine prohibits a machining power from being applied. Thus, it is possible to prohibit the machining power from applied in a state in which the working fluid is insufficient and the submerged machining cannot be appropriately performed, thereby preventing an electric shock due to contact with a wire electrode and machining parts of a workpiece and preventing the working fluid from scattering to the air, and improving safety.

## Description

### BACKGROUND OF THE INVENTION

### Field of the Invention

The present invention relates to a wire electric discharge machine having a function for discriminating a state in a work tank.

### Description of the Related Art

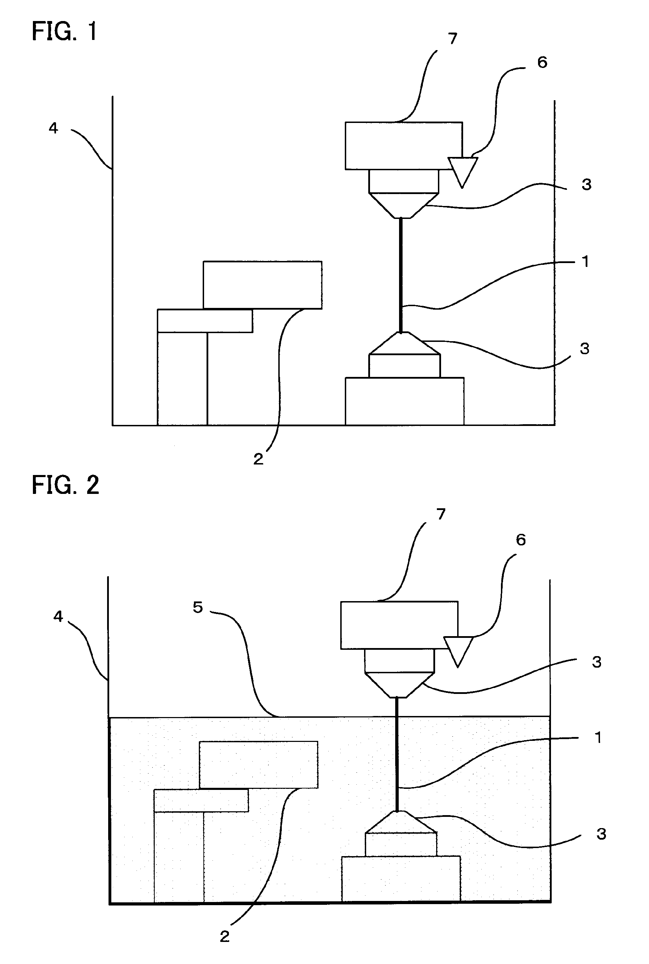

FIG. 1 is a schematic diagram showing the configuration of a general wire electric discharge machine. Working fluid is not stored in a work tank 4. The wire electric discharge machine applies a voltage between a wire electrode 1 and a workpiece 2 and performs machining of the workpiece 2 while spraying the working fluid between the wire electrode 1 and the workpiece 2 from working fluid spray nozzles 3 respectively arranged in upper and lower parts. As shown in FIG. 1, the entire wire electric discharge machine is arranged in the work tank 4 to be capable of collecting the working fluid used for the machining and machining sludge generated during the machining.

In wire electric discharge machining, there are a method of machining a workpiece in a state in which working fluid is stored in a work tank and a wire electrode and the workpiece are submerged in the working fluid, which is called submerged machining, and a method of machining a workpiece only by spraying working fluid without submergence a wire electrode and the workpiece in the working fluid, which is called flushing machining. A normal wire electric discharge machine can operate in both the machining methods.

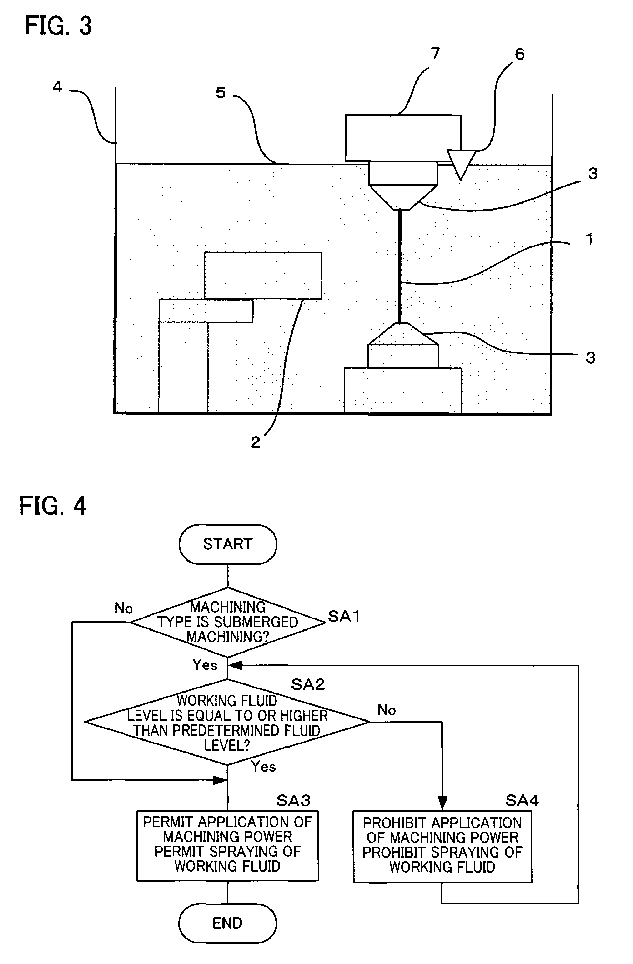

When the submerged machining is performed, at a point of machining start, after preparing for machining to, for example, place a workpiece and thread a wire electrode, an operator confirms that the wire electrode 1 and the workpiece 2 are in a completely submerged state in working fluid 5 as shown in FIG. 3. Then, the operator turns on a machining power supply for applying a voltage between the wire electrode 1 and the workpiece 2 and sprays the working fluid 5 between the wire electrode 1 and the workpiece 2 to start machining.

The wire electric discharge machine employing the submerged machining is disclosed in the following patent documents.
(1) Japanese Patent Application Laid-Open No. 5-345230 discloses a technique for providing a fluid level detector configured to arbitrarily set setting height of working fluid stored in a work tank according to a workpiece and detect a fluid level of the working fluid in the work tank with respect to a set height and supplying the working fluid by working fluid supplying means and stopping the supply on the basis of a detection result of the fluid level detector.
(2) Japanese Patent Application Laid-Open No. 59-232743 discloses a technique for providing a plurality of different abnormal state detectors including fluid level detectors for working fluid configured to, when an electric discharge machine changes to an abnormal state in which fire is likely to occur during machining by the electric discharge machine, detect the abnormal state and a plurality of different abnormal state eliminating means for eliminating the abnormal state and, when at least one of the abnormal state detectors detects an abnormality, turning off a power supply for machining and suspending the machining.

Since the conventional wire electric discharge machine can perform both of the submerged machining and the flushing machining as explained above, it is possible to start machining even if the wire electrode and the workpiece are not in a submerged state in the submerged machining. Therefore, if the machining is started when the working fluid is not stored at all as shown in FIG. 1 or when the fluid level of the working fluid is lower than predetermined height as shown in FIG. 2, an electric shock due to contact with the wire electrode 1 and machining parts of the workpiece 2 and scattering of working fluid to the air are likely to occur.

The technique disclosed in Japanese Patent Application Laid-Open No. 5-345230 is a technique for adjusting a supply amount of the working fluid to be stored in the work tank and controlling the supply amount to an appropriate amount of the working fluid. However, since electric discharge machining is not prohibited even when the supply amount is not the appropriate amount of the working fluid, an electric shock due to contact with the wire electrode 1 and machining parts of the workpiece 2 and scattering of working fluid to the air are still likely to occur.

Further, the technique disclosed in Japanese Patent Application Laid-Open No. 59-232743 is a technique for detecting an abnormality during the machining by the electric discharge machine and eliminating the abnormality. Therefore, depending on the length of a time lag from occurrence to detection of an abnormality, an abnormal state such as fire is likely to occur.

### SUMMARY OF THE INVENTION

Therefore, it is an object of the present invention to provide a wire electric discharge machine that can detect that working fluid stored in a work tank is at predetermined height and attain improvement of safety and prevention of scattering of the working fluid.

A wire electric discharge machine according to the present invention includes a work tank and a wire electrode arranged in the work tank. The wire electric discharge machine applies a voltage between a workpiece placed in the work tank and the wire electrode and performs machining of the workpiece while spraying working fluid between the wire electrode and the workpiece. The wire electric discharge machine further includes: a fluid level detecting unit configured to detect a fluid level of the working fluid in the work tank; a machining type discriminating unit configured to discriminate whether a type of the machining is submerged machining for performing the machining in a state in which the wire electrode and the workpiece are submerged in the working fluid or flushing machining for performing the machining in a state in which the wire electrode and the workpiece are not submerged in the working fluid; and a machining power application prohibiting unit configured to prohibit a machining power from being applied if a discrimination result by the machining type discriminating unit indicates that the machining type is the submerged machining and a detection result by the fluid level detecting unit indicates that the fluid level is lower than a predetermined position.

In the wire electric discharge machine according to the present invention, in case where the type of the machining is the submerged machining, if it is detected by the fluid level detecting unit that the working fluid does not reach a predetermined fluid level and the working fluid is not in the submerged state, it is possible to prevent, by prohibiting a machining power from being applied, an electric shock due to contact with the wire electrode and machining parts of the workpiece and scattering of working fluid to the air, thereby improving safety.

The wire electric discharge machine can further include a working fluid spray prohibiting unit configured to prohibit the working fluid from being sprayed between the wire electrode and the workpiece if the discrimination result by the machining type discriminating unit indicates that the machining type is the submerged machining and the detection result by the fluid level detecting unit indicates that the fluid level is lower than the predetermined position.

In this embodiment, in addition to prohibiting a machining power from being applied, it is possible to further prevent, by prohibiting the working fluid from being sprayed between the wire electrode and the workpiece, the working fluid from scattering to the air, thereby further improving safety.

The wire electric discharge machine can further include: a machining power application prohibiting unit configured to instruct application of a machining power for applying a voltage between the wire electrode and the workpiece; and a warning displaying unit configured to display a warning when an instruction of application of machining power is issued by the machining power application prohibiting unit if the discrimination result by the machining type discriminating unit indicates that the machining type is the submerged machining and the detection result by the fluid level detecting unit indicates that the fluid level is lower than the predetermined position.

In this embodiment, if the detection result by the fluid level detecting unit indicates that the fluid level is lower than the predetermined position so that it is inappropriate to perform submerged machining, it is possible to display a warning by the warning displaying unit and inform an operator that it is inappropriate to perform submerged machining when the instruction of application of machining power is issued by the machining power application prohibiting unit.

The wire electric discharge machine can further include: a working fluid spray instructing unit configured to instruct spraying of the working fluid between the wire electrode and the workpiece; and a warning displaying unit configured to display a warning when a working fluid spray instruction is issued by the working fluid spray instructing unit if the discrimination result by the machining type discriminating unit indicates that the machining type is the submerged machining and the detection result by the fluid level detecting unit indicates that the fluid level is lower than the predetermined position.

In this embodiment, if the detection result by the fluid level detecting unit indicates that the fluid level is lower than the predetermined position so that it is inappropriate to perform submerged machining, it is possible to display a warning by the warning displaying unit and inform the operator that it is inappropriate to perform submerged machining when instruction of spraying of the working fluid is issued by the working fluid spray instructing unit.

The wire electric discharge machine can further include: a machining power application prohibiting unit configured to instruct application of machining power for applying a voltage between the wire electrode and the workpiece; and a working fluid supplying unit configured to supply the working fluid to increase the working fluid in the work tank to a predetermined fluid level when an instruction of application of machining power is issued by the machining power application prohibiting unit if the discrimination result by the machining type discriminating unit indicates that the machining type is the submerged machining and the detection result by the fluid level detecting unit indicates that the fluid level is lower than the predetermined position.

In this embodiment, if the detection result by the fluid level detecting unit indicates that the fluid level is lower than the predetermined position so that it is inappropriate to perform submerged machining, the working fluid is supplied to increase the working fluid to the predetermined fluid level by the working fluid supplying unit when the instruction of application of machining power is issued by the machining power application prohibiting unit. Consequently, even if the operator does not supply the working fluid, the working fluid is automatically supplied, bringing a state that allows discharge machining to be carried out in an appropriate manner.

The wire electric discharge machine can further include: a working fluid spray instructing unit configured to instruct spraying of the working fluid between the wire electrode and the workpiece; and a working fluid supplying unit configured to supply the working fluid to increase the working fluid in the work tank to a predetermined fluid level when a working fluid spray instruction is issued by the working fluid spray instructing unit if the discrimination result by the machining type discriminating unit indicates that the machining type is the submerged machining and the detection result by the fluid level detecting unit indicates that the fluid level is lower than the predetermined position.

In this embodiment, if the detection result by the fluid level detecting unit indicates that the fluid level is lower than the predetermined position so that it is inappropriate to perform submerged machining, the working fluid is supplied to increase the working fluid to the predetermined fluid level by the working fluid supplying unit when instruction of spraying of the working fluid is issued by the working fluid spray instructing unit. Consequently, even if the operator does not supply the working fluid, the working fluid is automatically supplied, bringing a state that allows discharge machining to be carried out in an appropriate manner.

According to the present invention, it is possible to provide a wire electric discharge machine that can detect that working fluid stored in a work tank is at predetermined height and attain improvement of safety and prevention of scattering of the working fluid.

### BRIEF DESCRIPTION OF THE DRAWINGS

The object and the characteristics explained above and other objects and characteristics of the present invention will be made apparent from the following explanation of embodiments with reference to the accompanying drawings, wherein:
FIG. 1 is a schematic diagram showing the configuration of a wire electric discharge machine and shows a state in which no working fluid is stored in a work tank;
FIG. 2 is a schematic diagram showing the configuration of the wire electric discharge machine and shows a state in which a fluid level of working fluid in the work tank is lower than predetermine height;
FIG. 3 is a schematic diagram showing the configuration of the wire electric discharge machine and shows a state in which the fluid level of the working fluid in the work tank has the predetermined height;
FIG. 4 is a flowchart for explaining state discrimination processing in a work tank of a wire electric discharge machine according to a first embodiment of the present invention;
FIG. 5 is a table showing a state of permission or prohibition of operations according to a difference in level height of working fluid while comparing the present invention and the related art;
FIG. 6 is a flowchart for explaining state discrimination processing in a work tank of a wire electric discharge machine according to a second embodiment of the present invention; and
FIG. 7 is a flowchart for explaining state discrimination processing in a work tank of a wire electric discharge machine according to a third embodiment of the present invention.

### DETAILED DESCRIPTION OF THE PREFERRED EMBODIMENTS

### <First Embodiment>

In machining by a wire electric discharge machine, as explained above, there are a method of machining a workpiece 2 in a state in which a wire electrode 1 and a workpiece 2 are submerged in a working fluid 5 (submerged machining) and another method of machining a workpiece 2 only by spraying working fluid 5 in a state in which a wire electrode 1 and a workpiece 2 are not submerged in a working fluid 5 (flushing machining). An operator may set any one of those two machining methods that is to be carried out by means of a switch or the like.

When the machining is set to the submerged machining, the wire electric discharge machine detects using a fluid level sensor 6 whether a fluid level of the working fluid 5 reaches a predetermined position. If a detection result of the fluid level sensor 6 indicates that the fluid level of the working fluid 5 does not reach the predetermined position, the wire electric discharge machine prohibits a machining power from applied for applying a voltage between the wire electrode 1 and the workpiece 2. In addition to prohibiting a machining power from being applied, it is also possible to prohibit the working fluid 5 from being sprayed between the wire electrode 1 and the workpiece 2.

FIG. 4 is a flowchart for explaining state discrimination processing in a work tank of a wire electric discharge machine according to a first embodiment of the present invention. The flowchart is explained below step by step.
(Step SA1) It is determined whether a machining type of machining by a wire electric discharge machine is the submerged machining or not. If the machining type is the submerged machining (YES), the processing proceeds to step SA2. If the machining type is a machining other than the submerged machining, such as the flushing machining (NO), the processing proceeds to step SA3.
(Step SA2) A fluid level of the working fluid 5 is detected by the fluid level sensor 6 and it is determined whether the fluid level of the working fluid 5 is equal to or higher than a predetermined fluid level. If the fluid level is equal to or higher than the predetermined fluid level (YES), the processing proceeds to step SA3. If the fluid level is lower than the predetermined fluid level (NO), the processing proceeds to step SA4.
(Step SA3) Application of power is permitted and spraying of the working fluid 5 is permitted, and the processing is ended.
(Step SA4) Application of power is prohibited and spraying of the working fluid 5 is prohibited, and the processing returns to step SA2.

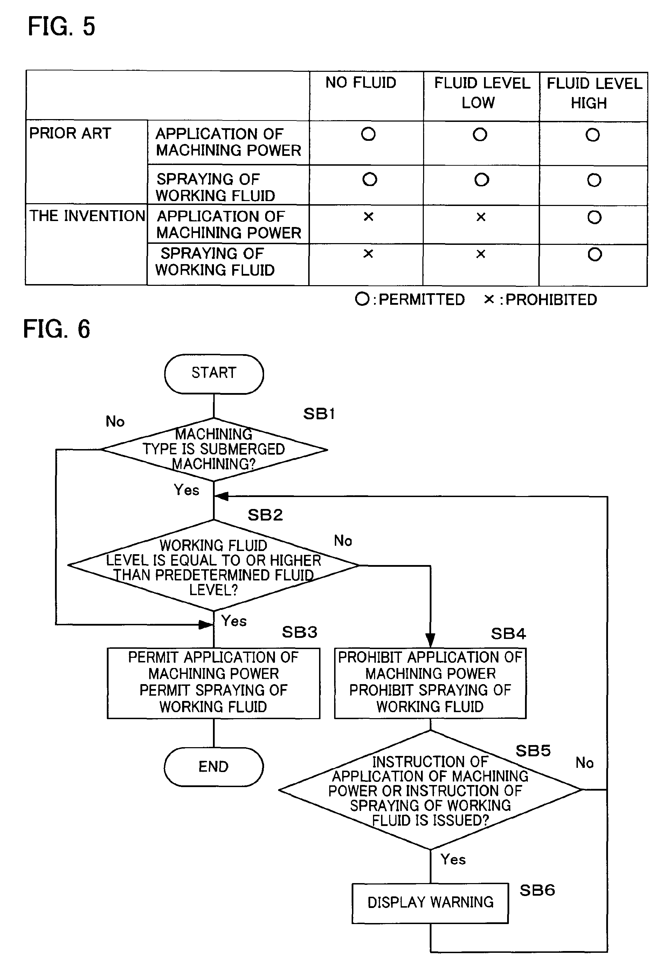

FIG. 5 is a table showing a state of permission or prohibition of operations according to a difference in level height of the working fluid 5, comparing the wire electric discharge machine according to the first embodiment of the present invention with conventional wire electric discharge machines.

As apparent from the table of FIG. 5, in the case of the prior art, application of machining power and spraying of working fluid are permitted even when working fluid 5 is not stored, even when the level of the working fluid 5 is lower than the predetermine level height (at a low fluid level), or when the working fluid 5 reaches the predetermined level height (at a high fluid level). In the case of the embodiment, on the other hand, application of machining power and spraying of the working fluid are prohibited when the working fluid 5 is not stored or when the level of the working fluid 5 is lower than the predetermined fluid height (at a low fluid level). Application of machining power and spraying of the working fluid are permitted only when the working fluid 5 reaches the predetermined level height (at a high fluid level). Therefore, in this embodiment, it is possible to attain improvement of safety and prevent the working fluid 5 from scattering.

### <Second Embodiment>

FIG. 6 is a flowchart for explaining state discrimination processing in a work tank of a wire electric discharge machine according to a second embodiment of the present invention. In the state discrimination processing in the work tank according to this embodiment, a function for displaying a warning when an instruction of application of machining power or an instruction of spraying of the working fluid 5 is issued if a fluid level of the working fluid 5 is lower than a predetermined fluid level is added to the state discrimination processing in the work tank according to the first embodiment. In the following explanation, the flowchart is explained step by step.
(Step SB1) It is determined whether a machining type of machining by a wire electric discharge machine is the submerged machining or not. If the machining type is the submerged machining (YES), the processing proceeds to step SB2. If the machining type is a machining other than the submerged machining, such as the flushing machining (NO), the processing proceeds to step SB3.
(Step SB2) A fluid level of the working fluid 5 is detected by the fluid level sensor 6 and it is determined whether the fluid level of the working fluid 5 is equal to or higher than a predetermined fluid level. If the fluid level of the working fluid 5 is equal to or higher than the predetermined fluid level (YES), the processing proceeds to step SB3. If the fluid level of the working fluid 5 is lower than the predetermined fluid level (NO), the processing proceeds to step SB4.
(Step SB3) Application of power is permitted and spraying of the working fluid 5 is permitted, and the processing is ended.
(Step SB4) Application of power is prohibited and spraying of the working fluid 5 is prohibited.
(Step SB5) It is determined whether an instruction of application of machining power or an instruction of spraying of the working fluid 5 is issued or not. If the instruction is issued (YES), the processing proceeds to step SB6. On the other hand, if the instruction is not issued (NO), the processing returns to step SB2.
(Step SB6) Warning is displayed and the processing returns to step SB2.

### <Third Embodiment>

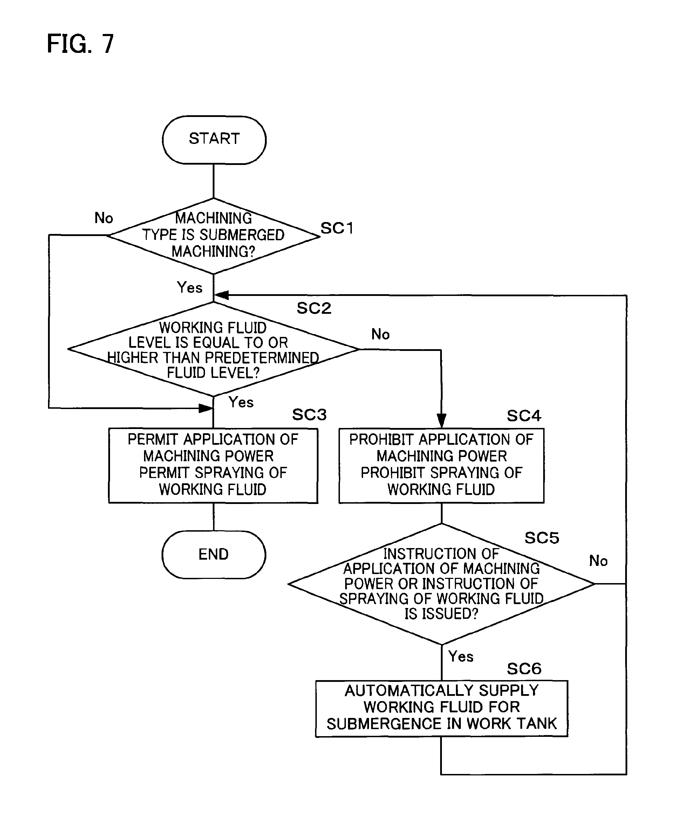

FIG. 7 is a flowchart for explaining state discrimination processing in a work tank of a wire electric discharge machine according to a third embodiment of the present invention. In the state discrimination processing in the work tank according to this embodiment, a function for automatically supplying working fluid 5 when an instruction of application of machining power or an instruction of spraying of the working fluid 5 is issued if a fluid level of the working fluid 5 is lower than a predetermined fluid level is added to the state discrimination processing in the work tank according to the first embodiment. In the following explanation, the flowchart is explained step by step.
(Step SC1) It is determined whether a machining type of machining by a wire electric discharge machine is the submerged machining or not. If the machining type is the submerged machining (YES), the processing proceeds to step SC2. If the machining type is a machining other than the submerged machining, such as the flushing machining (NO), the processing proceeds to step SC3.
(Step SC2) A fluid level of the working fluid 5 is detected by the fluid level sensor 6 and it is determined whether the fluid level of the working fluid 5 is equal to or higher than a predetermined fluid level. If the fluid level is equal to or higher than the predetermined fluid level (YES), the processing proceeds to step SC3. If the fluid level is lower than the predetermined fluid level (NO), the processing proceeds to step SC4.
(Step SC3) Application of power is permitted and spraying of the working fluid 5 is permitted, and the processing is ended.
(Step SC4) Application of power is prohibited and spraying of the working fluid 5 is prohibited.
(Step SC5) It is determined whether an instruction of application of machining power or an instruction of spraying of the working fluid 5 is issued or not. If the instruction is issued (YES), the processing proceeds to step SC6. On the other hand, if the instruction is not issued (NO), the processing returns to step SC2.
(Step SC6) The working fluid 5 is automatically supplied for submerged in the work tank, and the processing returns to step SC2.

In the embodiments, an operator operates switching of machining method to the submerged machining or the flushing machining in the wire electric discharge machine. However, a method of switching the machining method is not limited to this method. Other methods such as a method of instructing the machining method in a machining program may be used, for example.

In the embodiments, a sensor fixed to a guide block 7 on the upper side is used as the fluid level sensor 6. However, sensors of other types such as a float switch can also be used as the fluid level sensor 6.

Further, in the second embodiment (the flowchart of FIG. 6), warning is displayed when an instruction of application of machining power or an instruction of spraying of the working fluid 5 is issued if the fluid level of the working fluid 5 is lower than the predetermined fluid level. In the third embodiment (the flowchart of FIG. 7), the working fluid 5 is automatically supplied when an instruction of application of machining power or an instruction of spraying of the working fluid 5 is issued if the fluid level of the working fluid 5 is lower than the predetermined fluid level. However, the wire electric discharge machine may be configured to display the warning simultaneously with automatically supplying the working fluid 5.

## Claims

1. A wire electric discharge machine comprising:
a work tank; and
a wire electrode arranged in the work tank,
the wire electric discharge machine applying a voltage between a workpiece placed in the work tank and the wire electrode and performing machining of the workpiece while spraying working fluid between the wire electrode and the workpiece,
the wire electric discharge machine further comprising:
a fluid level detecting unit configured to detect a fluid level of the working fluid in the work tank;
a machining type discriminating unit configured to discriminate whether a type of the machining is submerged machining for performing the machining in a state in which the wire electrode and the workpiece are submerged in the working fluid or flushing machining for performing the machining in a state in which the wire electrode and the workpiece are not submerged in the working fluid; and
a machining power application prohibiting unit configured to prohibit a machining power from being applied if a discrimination result by the machining type discriminating unit indicates that the machining type is the submerged machining and a detection result by the fluid level detecting unit indicates that the fluid level is lower than a predetermined position.

2. The wire electric discharge machine according to claim 1, further comprising a working fluid spray prohibiting unit configured to prohibit the working fluid from being sprayed between the wire electrode and the workpiece if the discrimination result by the machining type discriminating unit indicates that the machining type is the submerged machining and the detection result by the fluid level detecting unit indicates that the fluid level is lower than the predetermined position.

3. The wire electric discharge machine according to claim 1 or 2, further comprising:
a machining power application prohibiting unit configured to instruct application of machining power for applying a voltage between the wire electrode and the workpiece; and
a warning displaying unit configured to display a warning when an instruction of application of machining power is issued by the machining power application prohibiting unit if the discrimination result by the machining type discriminating unit indicates that the machining type is the submerged machining and the detection result by the fluid level detecting unit indicates that the fluid level is lower than the predetermined position.

4. The wire electric discharge machine according to claim 1 or 2, further comprising:
a working fluid spray instructing unit configured to instruct spraying of the working fluid between the wire electrode and the workpiece; and
a warning displaying unit configured to display a warning when a working fluid spray instruction is issued by the working fluid spray instructing unit if the discrimination result by the machining type discriminating unit indicates that the machining type is the submerged machining and the detection result by the fluid level detecting unit indicates that the fluid level is lower than the predetermined position.

5. The wire electric discharge machine according to claim 1 or 2, further comprising:
a machining power application prohibiting unit configured to instruct application of machining power for applying a voltage between the wire electrode and the workpiece; and
a working fluid supplying unit configured to supply the working fluid to increase the working fluid in the work tank to a predetermined fluid level when an instruction of application of machining power is issued by the machining power application prohibiting unit if the discrimination result by the machining type discriminating unit indicates that the machining type is the submerged machining and the detection result by the fluid level detecting unit indicates that the fluid level is lower than the predetermined position.

6. The wire electric discharge machine according to claim 1 or 2, further comprising:
a working fluid spray instructing unit configured to instruct spraying of the working fluid between the wire electrode and the workpiece; and
a working fluid supplying unit configured to supply the working fluid to increase the working fluid in the work tank to a predetermined fluid level when a working fluid spray instruction is issued by the working fluid spray instructing unit if the discrimination result by the machining type discriminating unit indicates that the machining type is the submerged machining and the detection result by the fluid level detecting unit indicates that the fluid level is lower than the predetermined position.
